# FASCICULE DE BREVET EUROPEEN

(11) **EP 0 546 489 B1**
(45) Date de publication et mention de la délivrance du brevet: **05.04.1995**
(21) Numéro de dépôt: 92120845.0
(22) Date de dépôt: 07.12.1992
(51) Int. Cl.: F16N 39/00, B01F 5/04

(54) **Dispositif de réhomogénéisation d un mélange gaz/liquide**
Vorrichtung zum Rehomogenisierung einer Gas-Flüssigkeitsmischung
Device for rehomogenizing a gas-liquid mixture

(30) Priorité: 10.12.1991 FR 9115283
(43) Date de publication de la demande: 16.06.1993
(73) Titulaire: ALCATEL CIT, 75008 Paris (FR)
(72) Inventeur: Paquet, Jean-Marc, F-74940 Annecy le Vieux (FR); Chicherie, Jean-Pierre, F-74940 Annecy le Vieux (FR)
(74) Mandataire: Weinmiller, Jürgen

(56) Documents cités:
- EP-A- 0 231 993
- FR-A- 476 587
- US-A- 2 881 781

## Description

La présente invention concerne un dispositif de réhomogénéisation d'un mélange gaz/liquide passant dans une conduite dans laquelle est intercalé un dispositif de filtration.

Un tel dispositif est utilisable notamment dans le circuit de lubrification d'une pompe à vide à palettes et à joints d'huile, dans lequel l'huile de lubrification est mélangée avec de l'air afin d'obtenir un fluide plus élastique évitant des phénomènes de choc lors des phases de compression de la pompe et réduisant ainsi le bruit du fonctionnement de celle-ci.

Les circuits de lubrification de ce type sont souvent équipés d'un dispositif de filtration mécanique ou chimique, dans lequel le mélange de lubrification passe à travers des éléments de filtration ou de neutralisation. Lors de cette traversée, la vitesse de l'écoulement diminue et conduit à un dégazage au moins partiel de l'huile. Dans les dispositifs de filtration tels qu'ils sont utilisés actuellement, il se forme, au-dessus du niveau d'huile, une poche d'air sous pression qui, d'une part, limite l'efficacité du filtre en rendant une partie de l'élément filtrant inactive et, d'autre part, produit un écoulement hétérogène d'air et d'huile. En effet, cette poche d'air augmente de volume jusqu'à atteindre le niveau de l'orifice d'écoulement disposé latéralement. En se détendant ensuite dans la conduite de sortie, l'air remplit celle-ci et crée un flux d'air alternant avec la flux d'huile. Ce phénomène provoque un fonctionnement irrégulier de la pompe à vide et engendre des bruits.

L'invention vise à remédier à ces inconvénients et à fournir un dispositif produisant un débit de mélange gaz/liquide régulier et homogène.

On connait par EP-A-0 231 993 un dispositif utilisant pour ce faire un élément filtrant supplémentaire à cellules ouvertes. L'invention propose une toute autre solution.

A cet effet, le dispositif selon l'invention est caractérisé en ce que la sortie du dispositif de filtration est relieé à une enceinte collectrice placée au-dessus du dispositif de filtration par une conduite orientée essentiellement verticalement, l'enceinte collectrice comportant une conduite de sortie latérale disposée en dessous du niveau prévu du liquide recueilli dans cette enceinte, une partie supérieure de ladite enceinte étant destinée à recueillir en fonctionnement le gaz qui se dégage au-dessus de ce niveau de liquide, ladite partie supérieure communiquant avec l'entrée d'un gicleur dont l'orifice de sortie débouche dans ladite conduite de sortie latérale de l'enceinte collectrice, de manière à réinjecter le gaz recueilli dans la partie supérieure de l'enceinte collectrice dans le flux de sortie et à former un écoulement homogène gaz/liquide.

L'enceinte collectrice comporte, de préférence, un couvercle dont la partie centrale est plus proche du niveau du liquide dans cette enceinte que la partie périphérique, cette partie périphérique communicant avec ledit gicleur.

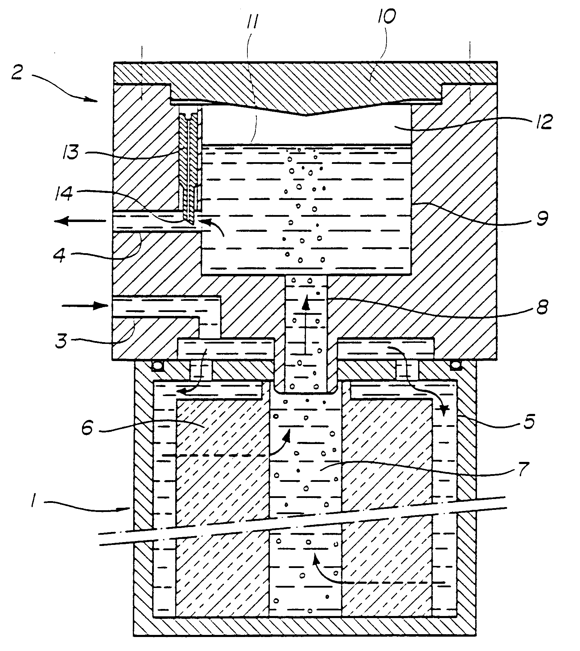

D'autres caractéristiques et avantages de l'invention ressortiront de la description suivante d'un exemple de réalisation du dispositif selon l'invention, illustré par le dessin annexé, comportant une figure unique.

La figure est une coupe axiale d'un dispositif de réhomogénéisation d'un mélange air/huile selon l'invention.

L'ensemble selon la figure comporte un dispositif de filtration 1 et une partie de réhomogénéisation 2 d'un mélange air/huile arrivant par une conduite d'entrée 3 et sortant par une conduite de sortie 4. Le chemin du fluide est indiqué par des flèches dans la représentation schématique de la figure.

Le dispositif de filtration comprend une chambre 5, dans laquelle est disposé un élément de filtration 6 de forme essentiellement cylindrique que le mélange air/huile est amené à traverser. Dans la partie intérieure 7 de cet élément, l'huile contient de grosses bulles d'air qui vont remonter vers la surface de l'huile en passant par une conduite de sortie 8 disposée verticalement dans l'axe du dispositif de filtration. La conduite 8 débouche dans une enceinte collectrice 9 fermée par un couvercle 10 de forme intérieure légèrement conique, telle que montrée à la figure.

Dans l'enceinte collectrice 9, l'huile atteint un niveau 11, et les bulles d'air se regroupent dans la partie supérieure 12 qui communique avec un orifice d'entrée d'un gicleur 13. Cet orifice d'entrée étant situé en un endroit périphérique de l'enceinte 9, la forme du couvercle 10, dont la partie centrale est abaissée, facilite le flux d'air vers cet endroit. L'orifice de sortie 14 du gicleur 13 débouche dans la conduite de sortie 4, qui traverse la paroi latérale de l'enceinte 9 en dessous du niveau d'huile 11. Le passage de l'huile devant l'orifice de sortie 14 du gicleur 13 s'effectue à une vitesse suffisante pour que l'air recueilli dans la partie 12 de l'enceinte 9 soit aspiré et injecté dans le flux d'huile formant ainsi, à la sortie de la conduite 4, un écoulement régulier d'un mélange homogène air/huile.

L'application du dispositif selon l'invention n'est, bien entendu, pas limitée à l'exemple mentionné d'un circuit de lubrification d'une pompe à vide. Un tel dispositif de réhomogénéisation peut être utilisée avantageusement dans toute machine hydraulique travaillant avec un mélange gaz/liquide.

## Revendications

1. Dispositif de réhomogénéisation d'un mélange gaz/liquide passant dans une conduite (3,4) dans laquelle est intercalé un dispositif de filtration (1), caractérisé en ce que la sortie du dispositif de filtration (1) est relieé à une enceinte collectrice (9) placée au-dessus du dispositif de filtration par une conduite (8) orientée essentiellement verticalement, l'enceinte collectrice (9) comportant une conduite de sortie latérale (4) disposée en dessous du niveau (11) prévu du liquide recueilli dans cette enceinte, une partie supérieure (12) étant destinée à recueillir en fonctionnement le gaz qui se dégage au-dessus de ce niveau de liquide (11), ladite partie supérieure (12) communiquant avec l'entrée d'un gicleur (13) dont l'orifice de sortie (14) débouche dans ladite conduite de sortie latérale (4) de l'enceinte collectrice (9), de manière à réinjecter le gaz recueilli dans la partie supérieure (12) de l'enceinte collectrice (9) dans le flux de sortie et à former un écoulement homogène gaz/liquide.

2. Dispositif selon la revendication 1, caractérisé en ce que l'enceinte collectrice (9) comporte un couvercle (10) dont la partie centrale est plus proche du niveau du liquide (11) dans cette enceinte que la partie périphérique, cette partie périphérique communicant avec ledit gicleur (13).

## Claims

1. Apparatus for re-homogenizing a gas/liquid mixture passing through a duct (3, 4) in which a filter device (1) is interposed, said apparatus being characterized in that the outlet of the filter device (1) is linked to a collecting enclosure (9) placed above the filter device by a duct (8) which is essentially vertical, the collecting enclosure (9) including a side outlet duct (4) disposed below the anticipated level (11) of the liquid collected in the enclosure, a top portion (12) being designed, in operation, to collect the gas given off above the level of liquid (11), said top portion (12) communicating with the inlet of a jet (13) whose outlet orifice (14) opens out into said side outlet duct (4) of the collecting enclosure (9), so as to reinject the gas collected in the top portion (12) of the collecting enclosure (9) into the outlet flow and form a homogeneous gas/liquid stream.

2. Apparatus according to claim 1, characterized in that the collecting enclosure (9) includes a cover (10) whose central portion is closer to the level of liquid (11) in the enclosure than the peripheral portion, which peripheral portion communicates with said jet (13).

## Patentansprüche

1. Vorrichtung zur Homogenisierung eines Gas-/Flüssigkeitsgemischs, das durch eine Leitung (3, 4) fließt, in welche eine Filtervorrichtung (1) eingefügt ist, dadurch gekennzeichnet, daß der Ausgang der Filtervorrichtung (1) über eine im wesentlichen senkrecht ausgerichtete Leitung (8) mit einem Sammelraum (9) verbunden ist, der sich oberhalb der Filtervorrichtung befindet und eine seitliche Ausgangsleitung (4) aufweist, die unterhalb des vorgesehenen Pegels (11) der in diesem Raum gesammelten Flüssigkeit angeordnet ist, wobei ein oberer Bereich (12) des Raums im Betrieb das Gas aufnehmen soll, das oberhalb dieses Flüssigkeitspegels (11) freigesetzt wird, und mit dem Eingang einer Düse (13) in Verbindung steht, deren Ausgangsöffnung (14) in die seitliche Ausgangsleitung (4) des Sammelraums (9) mündet, so daß das im oberen Bereich (12) des Sammelraums (9) gesammelte Gas wieder in den Ausgangsfluß eingespeist wird und sich eine homogene Gas-/Flüssigkeitsströmung ergibt.

2. Vorrichtung nach Anspruch 1, dadurch gekennzeichnet, daß der Sammelraum (9) einen Deckel (10) enthält, dessen zentraler Bereich dem Flüssigkeitspegel (11) in diesem Raum näher ist als sein peripherer Bereich, wobei dieser periphere Bereich mit der Düse (13) in Verbindung steht.
